# EUROPEAN PATENT APPLICATION

(11) **EP 1 933 070 A1**
(43) Date of publication of application: **18.06.2008**
(21) Application number: 06025932.2
(22) Date of filing: 14.12.2006
(51) Int. Cl.: F16K 11/04, F16K 17/04, F16K 17/168, F16K 31/143

(54) **A control valve for stabilizing constructions**

(71) Applicant: Vrijens, Gert Albert Louis, 3350 Drieslinter (BE)
(72) Inventor: Vrijens, Gert Albert Louis, 3350 Drieslinter (BE)
(74) Representative: Plas, Axel Ivo Michel

(57) **Abstract**

A control valve for use in hydraulic systems. The valve connects three or more channels and opens or closes all of these channels at the same time. The valve can be operated using an actuator provided on the exterior of the valve. By default the valve takes a closed position when it is not operated. The valve has a collector which guides the hydraulic fluid in all the channels onto a single plane used to close all the channels simultaneously.

## Description

### Field of the Invention

The present invention generally relates to control valves that are used in closed hydraulic systems for stabilizing constructions such as tables or scaffoldings on uneven surfaces. These control valves are used to put the construction into position and lock the construction in a stable position. In general any construction which is designed to stand in a horizontal or other stable position via at least three feet on an uneven underground can contain a levelling system with such a control valve.

The mentioned constructions can be any type of device which is optimally used with the top surface placed horizontally or in another stable position, for instance tables and scaffolding are best placed horizontally to avoid objects sliding off from them or people falling down from them. Other examples which require stabilization are a miter saw, theodolites or tripods for cameras.

### Background of the Invention

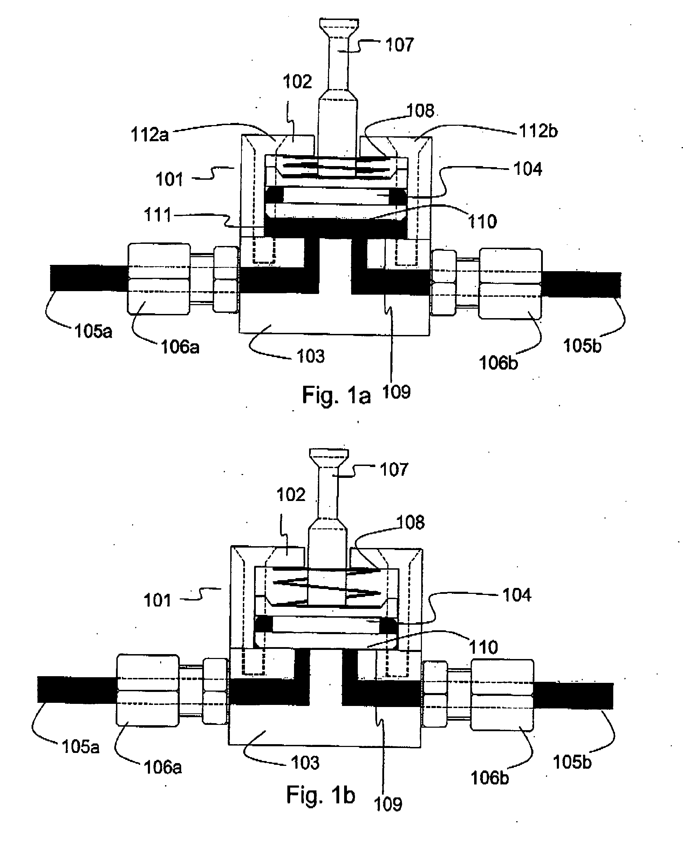

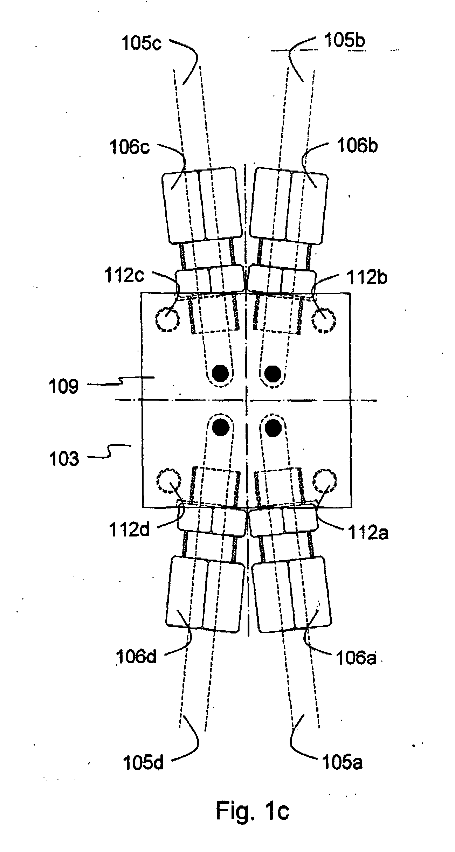

US Patent 4,625,424 entitled "Quick Leveling Apparatus" describes a device that can be used to level a surface such as a table. This device consists of an operating block (referenced to as 7 in Fig. 1 a of US 4,625,424) which is operated by a knob (20 in Fig. 1a), bellows for supporting the apparatus and performing the levelling and conduits (8 in Fig. 1a) connecting the bellows to the operating block (7). When pressing the knob (20), all of these conduits (8) come in open communication with each other and the hydraulic fluid can flow between the bellows and level the apparatus. Once the knob (20) is released all conduits (8) are closed and the bellows (9) remain in their position. The central operating block (7) consists of a conical shaped wall and a conical shaped valve kept in position by a spring (15 in Fig. 1a). When the valve is pressed onto the wall by the spring (15), it seals the conduits (8).

The design of this central operating block has several disadvantages due to the internal structure of the operating block. When the block has to close all the conduits, it depends on the friction based joining between the conical wall and conical valve. If any fluid is left between the valve and the wall or in case of imperfect joining between the wall and valve, e.g. due to manufacturing imperfections in the conical shaped surfaces, the valve will not seal the conduits completely and leakage between several or all bellows remains possible. Such leakage will result in a malfunction of the stabilizing system when the known valve is used, in particular when external pressure or loads are imposed on the construction to be stabilized.

Another disadvantage lies in the production of this type of operating blocks. Due to the strict tolerances that are required for a correct functioning of the block in particular with respect to eventual imperfections in the surfaces of the conical valve and conical wall, it is difficult or even impossible to economically manufacture the block of the prior art valve in a mass production process.

A straightforward solution to cope with this problem is the use of a more elastic material such as a rubber adhered onto the conical valve. The rubber would be able to deform and provide a proper sealing of the conduits when the operating block would be in a closed position. The rubber and its ability to deform depends heavily on certain characteristics of the rubber and especially on the shore hardness of the material, Even the hardest materials such as Teflon are prone to some deformation. This simple solution is however not feasible for extensive use as the elastic material is susceptible to irreversible deformation and damage as a result of friction along the conical shaped surface. When the valve is in a closed position, the elastic material may slightly extend into the conduit openings due to the force which closes the conduits. Once the valve is opened, this extended material rubs against the conical shaped wall, in particular against the corners between conduit opening and the conical shaped wall, leading to damage of the elastic material and an improperly or unreliably functioning valve.

Inappropriate or imprudent use of the levelling apparatus known from US 4,625,424, e.g. placing a load on the table which is too heavy for this table, may lead to unrecoverable damage. Due to the load on the bellows and the sealed conduits, pressure in the conduits will rise which may lead to a rupture of the conduits. This will cause irreversible damage to the system resulting in outage for maintenance and additional costs. Moreover, as a result of hydraulic fluid leaking out of ruptured conduits, the floor underneath the table and other items such as carpet, clothing or chairs in the vicinity of the prior art system may get damaged.

It is an object of the present invention to provide a central control valve for stabilizing systems which overcomes the above described disadvantages of the prior art. In particular it is an objective to provide a design which facilitates mass production. It is another object of this invention to solve the problem of small remainders of fluid inside the control block that have a detrimental effect on its perfect functioning. Finally this invention aims at avoiding fatal damage to the stabilization system and items in its vicinity in case of inappropriate use, for instance by placing too much force on the apparatus.

### Summary of the Invention

According to the present invention, the above described objects are realized and the disadvantages of the prior art are resolved by a control valve for use in closed hydraulic systems for stabilizing constructions on an uneven surface comprising:
- a collector for receiving at least three channels containing a hydraulic fluid;
- means for opening or closing a path between all these channels;
- an actuator for manipulating the means for opening or closing the path; and
- means for keeping the path in a closed position when the actuator is not actuated, the collector having an internal structure for guiding all channels onto a single plane terminating the channels.

In the context of the present invention, a closed hydraulic system at the time of stabilization is any system where the amount of fluid does not change when the system is locked in place. In other words, adding or removing hydraulic fluid from the system while the valve is open is possible, but as soon as the valve is closed, the system is locked and the amount of fluid can no longer change. Although the legs of a construction may be in firm contact with the ground while the valve is open, any load on the construction will influence the position of the legs. Therefore the system with the valve in an open position is not stable.

There are various possible ways to allow a change in the volume of hydraulic fluid in the system. For instance, one of the channels may be connected to the valve, to a piston and additionally to a pump or reservoir with some sort of separator. This separator could be used to open or close a path to the pump or reservoir. When the separator is opened, hydraulic fluid can flow into the system or be extracted using the pump. Another possibility is to add an additional channel to the valve which may be connected to an additional piston or a reservoir with a pump. Through this channel, it becomes possible to alter the volume of hydraulic fluid in the system. Altering the volume by adding fluid to the system may only be possible with a limited quantity of hydraulic fluid Changing the amount of fluid during the stabilization, for instance by opening the valve again once a stabilized situation was reached, may interfere with the stability and should therefore be avoided at all costs..

According to the invention, all of the channels are guided onto a single flat plane in the collector. This way, the requirement for conical shaped walls and valves is removed and the use of cylindrical shaped pistons and walls as means for opening and closing the path between all channels is made possible. These cylindrical shaped pistons are in common use today and are practical and economical to manufacture. The flat surface of the piston can be adapted with for instance a rubber disc which is pressed onto the channel openings for a better sealing of these channels. The force applied onto the single surface that terminates the channels by the means that open or close the path between all channels is sufficient to seal the channels, and this force that is relied upon for closing the channels, is easy to realise, even with mass produced components. Only the surface which is used to close all channels requires a good finish, and this can be achieved by adding for instance a rubber pad onto this surface. The rubber pad does not require a smooth surface in the piston side; uneven spots on the rubber pad on the side of the channels are of no problem as the force on the pad will remove their effect. This way no leakage is possible between the channels when the actuator is not operated.

An optional feature of the control valve according to the present invention is that the means for keeping the path in a closed position may be adapted to be deactivated in case of a high pressure in either of the channels as claimed in claim 2.

This high pressure can arise in case of inappropriate use of the system, for instance by placing a load onto the system which is too heavy. This load produces a high pressure in the channels which would lead to damage in the prior art systems. By enabling the means which keep the path closed to open the path in case of such a high pressure, damage to the system can be avoided. In such case, where the valve will open, the construction may tilt to one side under high load until a stable state is reached. After removing the load, the valve can be activated again, the construction will return to the original, levelled, position and no damage will have occurred.

According to claim 3, the control valve may contain a spring as means to keep the path in a closed position by default.

The requirements for such spring are determined by few parameters which are mainly depending on the other components in the system. The selected spring has to be strong enough to resist the pressure generated by the maximum acceptable load on the construction. If the control valve is designed to offer protection against damage due to high pressure and a spring is used to achieve this, the spring has to be selected in such a way that it compresses at a lower pressure than the maximum pressure allowed in the channels or pistons which are in contact with the surface.
The main advantage of springs is their wide availability, making it easy to find a spring that fits the requirements or to have a spring produced according to these requirements. Their low complexity and the amount of materials required for production make them a suitable component to use in a mass produced control valve.

An alternative to the spring could be a screw thread provided on the means for opening and closing a path between all channels. Twisting these means clockwise fastens the screw thread and locks the valve in a closed position. Twisting these means anticlockwise opens the valve allowing free communication between the channels. The valve would remain in the position it was left in, and would not return automatically to a closed position.

As specified in claim 4, the actuator may optionally only be operated by applying a force to the actuator which is higher then a threshold force. This threshold force may be determined by the means to keep the path in a closed position.

A compression spring for instance, has two features which can be used to realize an embodiment of the invention having this optional feature. Due to the nature of a spring to extend unless a force is applied to it, it is ideal to keep the valve in a closed position. The ability of compressing a spring with a certain force makes it an option to use in conjunction with the actuator where the force needed to compress the spring determines the threshold force. The spring only has to be compressed so far as to create enough space between the channel openings and the means for closing these channels to allow molecules of hydraulic fluid to flow between the channels. This space can be enlarged by applying more force to the spring and thus compressing it more. The stiffness of the spring determines how much force is required to create the minimal required opening for the hydraulic fluid to flow between the channels.

In case a screw thread is used to keep the valve in an open or closed position, the threshold force is determined by the amount of force needed to turn the screw thread in either direction.

As specified in claim 5, the control valve optionally may be connected to adjustable means which are in contact with the surface on which the construction has to be stabilized.

These means can be pistons of which the position is determined by a certain amount of hydraulic fluid. The more hydraulic fluid that flows into the piston, the further it will extend raising one part of the construction. When force is applied to a piston, it will try to push hydraulic fluid into the channels, and through the valve into other channels when the valve is open after which the piston will retract and lower a part of the construction.

### Brief Description of the Drawings

Fig. 1a shows a side view of a preferred embodiment of the present invention in an open position providing a protection against overpressure.
Fig. 1b shows a side view of a preferred embodiment of the present invention in a closed position providing a protection against overpressure.
Fig. 1c shows a top view of a preferred embodiment of the present invention in an open position providing a protection against overpressure.
Fig. 2a illustrates a side view of a second embodiment of the present invention without a protection against overpressure in an open position.
Fig. 2b illustrates a side view of a second embodiment of the present invention without a protection against overpressure in a closed position.

### Detailed Description of Embodiment(s)

This first embodiment illustrated by Fig. 1a, Fig. 1b and Fig. 1c concerns a control valve 101 with several channels 105a, 105b, 105c and 105d connected to valve 101. Fig. 1a and Fig. 1b only show two channels 105a and 105b, but channels 105c and 105d are also present in these figures. Similarly not all connectors 106a, 106b, 106c and 106d and screw holes 112a, 112b, 112c and 112d are shown in Fig. 1a and Fig.1b but they are a part of the embodiment.

This first embodiment illustrated by Fig 1a, Fig. 1b and Fig. 1c concerns a control valve 101 consisting of a housing 102 and a collector 103. The housing 102 is mounted on top of the collector 103 using screws placed in the holes 112a, 112b, 112c and 112d. These screws provide a tight sealing between the housing 102 and the collector 103.

The collector 103 is built to guide channels 105a, 105b, 105c and 105d onto a single plane 109 which is located at the top of the collector 103. These channels 105a, 105b, 105c and 105d are connected to the collector using respective connectors 106a, 106b, 106c and 106d. These connectors 106a, 106b, 106c and 106d can be of a type which is screwed to the collector for descent fitting or which slide onto the collector 103 and lock in a fixed position. Another option, not illustrated in a figure, is to glue channels 105a, 105b, 105c and 105d into openings in collector 103.

The housing 102 contains a piston 104 whose bottom plane is labelled 110 in Fig. 1a and Fig. 1b. In a closed situation, plane 109 of the collector is pressed against plane 110 of the piston 104 closing off all channels 105a, 105b, 105c and 105d connected to the collector 103. The piston 104 may be equipped with a rubber pad on plane 110 to provide a better sealing of the channels 105a, 105b, 105c and 105d. The housing further contains a spring 108 which keeps the piston 104 pressed onto the collector 103 by default if control valve 101 is not operated.

Fig. 1 a shows this preferred embodiment in an open position. Spring 108 is pressed together by a force away from the collector 103. This moves plane 110 away from plane 109 and creates chamber 111 between both planes. In order to allow free communication between all channels 105a, 105b, 105c and 105d, chamber 111 has to be large enough for molecules of hydraulic fluid to flow through the chamber 111. Therefore the force applied to spring 108 has to be large enough to provide at least that minimum of space in chamber 111.

The valve 103 is kept open in Fig. 1a by applying a force to actuator 107. In this particular embodiment, pulling actuator 107 moves piston 104 away from collector 103, creating chamber 111. The chamber exists for as long as actuator 107 is actuated.

Fig. 1b shows the same preferred embodiment in a closed position. Spring 108 is a compression spring which returns to an extended position when no force is applied. Therefore spring 108 is able to press piston 104 against collector 103 when actuator 107 is not actuated. Selection of spring 108 is done according to specific parameters. Because spring 108 has to provide a protection against high pressure, it has to compress by a force which is below a critical force that may lead to damage. The critical force is determined by two factors, the desired maximum load on the construction and the maximum pressure which can the channels 105a, 105b, 105c and 105d can withstand.

Fig. 1c shows a top view of the same embodiment. This top view is a cross section of the valve 101 as shown in Fig. 1a and Fig. 1b. In plane 109, which is the top of collector 103, openings 113a, 113b, 113c and 113d are shown. These openings terminate channels 105a, 105b, 105c and 105d which are guided onto plane 109. Further shown are holes 112a, 112b, 112c and 112d used to screw the housing 102 on top of collector 103. Lastly connectors 106a, 106b, 106c and 106d are shown which connect channels 105a, 105b, 105c and 105d to collector 103.

The main use for valve 101 is in stabilization purposes. For example a table which consists of four legs and a tabletop is preferably positioned with the top in a horizontal position. This avoids objects from sliding off the table. To achieve this, valve 101 can be used in combination with channels 105a, 105b, 105c and 105d and a set of pistons. These pistons are mounted in the legs of the table and are connected to valve 101 with the channels 105a, 105b, 105c and 105d. These channels are filled with hydraulic fluid which is used to extend the pistons in the legs.

The goal is to bring all pistons in the legs in contact with the ground by extending some and retracting other pistons. When the table is placed on the ground and actuator 107 is operated, some of the pistons which are already in contact with the floor can retract. This pushes hydraulic fluid from a piston in for instance channel 105a. This fluid will then be divided to the channels 105b, 105c, 105d and flow into the pistons connected thereto. These pistons can then extend until they are in contact with the ground and the table is in a horizontal position. If the actuator 107 is released, spring 108 will push the piston 104 in a closed position and lock the table in place The table is locked because chamber 111 is removed and no hydraulic fluid can flow between the channels 105a, 105b, 105c, 105d.

Once the table is stabilized it is also protected from inappropriate use. If a load is placed above the leg which is connected to channel 105b, and this load is too high according to the design, a force is exerted on the piston. The piston creates a higher pressure in the channel 105b and this higher pressure exerts a force onto plane 110 of piston 104. This force is too high according to the design and therefore it compresses spring 108. This creates chamber 111 and the hydraulic fluid is able to flow between all the channels 105a, 105b, 105c, 105d. The result is that one leg moves down and all other pistons will extend until pressure in all legs is equal or until the actuator is closed. This ensures that all legs are still in contact with the ground, and no damage is done to the system.

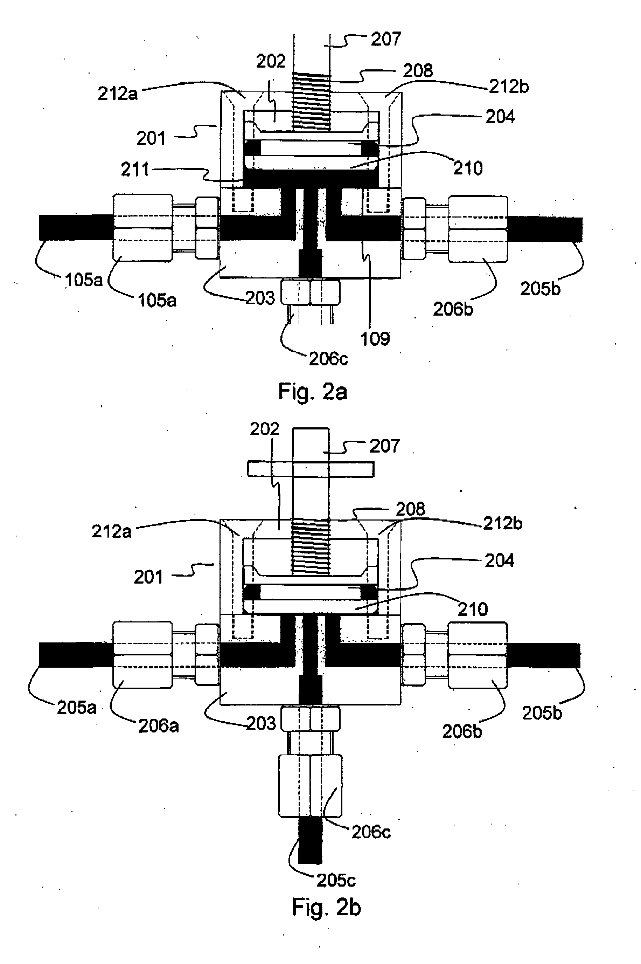

Fig. 2a and 2b illustrate a second embodiment 201 of the valve according to the present invention. It differs from the embodiment illustrated in figures 1a through 1c by the method and means to keep the valve closed. Another difference is the absence of the protection against high pressure. Fig. 2a shows the embodiment in an open situation whereas Fig. 2b illustrates a closed situation.

The control valve 201 consists of a housing 202 and a collector 203. These are held on top of each other using screws in holes 212a, 212b, 212c and 212d of which only two are shown in these figures: Channels 205a, 205b and 205c filled with hydraulic fluid are connected to collector 203 using connectors 206a, 206b and 206c. Piston 204 is placed in housing 202 and connected to actuator 207. At the end of actuator 207 is a screw thread 208 fitted on the connection between actuator 207 and piston 204.

The collector 203 is constructed to receive the channels 205a, 205b and 205c and guide them onto the plane 209. This plane 209 forms one part of chamber 211 and contains an opening for each channel 205a, 205b and 205c connected to the collector 203.

Piston 204 is used to close the channels 205a, 205b and 205c and keep the valve 201 in a closed position as illustrated in Fig. 2b. At the bottom of piston 204 is a plane 210 which is pressed onto plane 209 of the collector 203 to close the valve. The valve 201 is operated by turning actuator 207 clockwise to close the valve and counter clockwise to open the valve 201. The screw thread 208 provides a firm closing of the valve 201 and cannot be pushed open in case of a force exerted on piston 204. Consequentially this does not provide a protection in case of high pressure but provides a firmer seal of the channels 205a, 205b and 205c.

Chamber 211 is formed by planes 209 at the bottom and 210 at the top. The walls of housing 202 provide the side walls of chamber 211. Through this chamber, channels 205a, 205b are brought in communication with each other when the valve is in an open position as illustrated by Fig. 2a. This allows hydraulic fluid to flow between the channels 205a, 205b and 205c and move pistons connected to the control valve 201.

When using valve 201 in a tripod on which a camera is mounted, the valve 201 is connected to three pistons mounted in the legs of the tripod. These pistons can extend or retract to stay in contact with the ground. To achieve a levelled and stable situation, the tripod is placed on the ground and the valve 201 is opened by turning the actuator 207 counter clockwise. This moves the piston 204 away from the collector 203 due to the screw thread on the connection between actuator 207 and piston 204 and the opposite screw thread present in housing 202. Hydraulic fluid will be pushed into the channels by pistons already in contact with the ground, and flow from channels into pistons which are not yet in contact with the ground. As soon as all pistons are firmly on the ground, actuator 207 is turned clockwise until valve 201 is closed and the tripod is locked.

The present invention has been described with respect to a few specific applications such as tripods, miter saws, scaffolding or theodolites. There are however numerous other possible applications such as different other types of machines used for cutting wood or metal, machines used for printing, machines used in the production of metal wires or sheet metal, tables, desks, cupboards, containers for solid or liquid materials, moveable heaters or air-conditioning units, tables for games (for instance table football, pool, snooker, gambling machines). Other possible applications are situated in military equipment for weaponry or telecommunications or radars. Also possible are medical applications such as surgery tables, x-ray devices, CT scanners and other diagnostic appliances.

It should be noted that only a few possible connectors are mentioned in the above description. It is possible to screw the channels onto the collector with a connector fitted with screw thread and an appropriate opposing side with screw thread fitted on the collector. However it may also be done using a system where the connecter slides over the opposing side on the collector and then clicks in a locked position which retains the channel in place. Another possible way of attaching the channels to the collectors is providing a larger hole in the collector where the channels slide in and possibly the use of glue to firmly keep the channels in place. The channels may be constructed from a metal and could be welded or soldered to the collector.

It is important to realize that the actuator and the connection between actuator and piston which are illustrated in the figures is not limited to these two forms. For instance, a lever could be attached to a pull-up actuator (such as shown in Fig. 1 a and 1 b) and provide a handle that may be pushed down to open the valve. The actuator may be replaced by an electrical system which for instance uses a stepping motor to open or close the valve and possibly allow several sizes of the chamber to be used. The actuator could be constructed as a hydraulic system which may be activated using a pump or a pneumatic system using some form of air to open and close the valve.

Another remark is that the use of a single number designating a particular part of the embodiment in several figures implies that it is the same element which is referenced. As an example, spring 108 in Fig. 1a is the same as spring 108 in Fig. 1b, the only difference is the state of this spring.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A control valve (101; 201) for use in closed hydraulic systems for stabilizing constructions on an uneven surface comprising:
a collector (103; 203) for receiving at least three channels (105a, 105b, 105c, 105d; 205a, 205b, 205c) containing a hydraulic fluid;
means (104; 204) for opening or closing a path (111, 211) between all said channels (105a, 105b, 105c, 105d; 205a, 205b, 205c);
an actuator (107;207) for manipulating said means (104; 204) for opening or closing said path (111); and
means (108; 208) for keeping said path (111; 211) in a closed position when
said actuator (107; 207) is not actuated;
**characterized in that** said collector (103) has an internal structure for guiding all said channels (105a, 105b, 105c, 105d; 205a, 205b, 205c) onto a single plane (103; 203) terminating said channels (105a, 105b, 105c, 105d; 205a, 205b, 205c).

2. A control valve (101; 201) as described in claim 1,
**characterized in that** said means (108; 208) for keeping said path (111; 211) in a closed position are adapted to be deactivated by said hydraulic fluid in either of said channels (105a, 105b, 105c, 105d; 205a, 205b, 205c) in case of high pressure in either of said channels (105a, 105b, 105c, 105d; 205a, 205b, 205c).

3. A control valve (101; 201) as described in claim 1,
**characterized in that** said means (108; 208) for keeping said path in a closed position comprise a spring (108; 208) positioned to keep said path (111; 211) in a closed position by default.

4. A control valve (101; 201) as described in claim 1,
**characterized in that** said actuator (107; 207) can only be operated by applying a force to said actuator (107; 207) higher then a threshold force, where said threshold force is determined by said means (108; 208) for keeping said path in a closed position.

5. A control valve (101; 201) as described in claim 1,
**characterized in that** said channels (105a, 105b, 105c, 105d; 205a, 205b, 205c) are connected to adjustable means which are in contact with said surface to stabilize said construction on that surface.
